Europäisches Patentamt

European Patent Office

Office européen des brevets

(11) Veröffentlichungsnummer: **0 312 788 B1**

(12) ## EUROPÄISCHE PATENTSCHRIFT

(45) Veröffentlichungstag der Patentschrift: **15.12.93**

(51) Int. Cl.5: **G01N 21/47**, G01N 21/53, G01N 21/00

(21) Anmeldenummer: **88115442.1**

(22) Anmeldetag: **21.09.88**

(54) **Vorrichtung zur Sichtweitenmessung.**

(30) Priorität: **17.10.87 DE 3735267**

(43) Veröffentlichungstag der Anmeldung:
**26.04.89 Patentblatt 89/17**

(45) Bekanntmachung des Hinweises auf die
Patenterteilung:
**15.12.93 Patentblatt 93/50**

(84) Benannte Vertragsstaaten:
**DE ES FR GB IT SE**

(56) Entgegenhaltungen:
**AT-B-10 681**
**AT-B-22 179**
**DE-A- 2 328 092**
**DE-A- 2 427 623**

**Beiträge zur Physik der Atmosphäre, Band
37, Heft 3/4, 1964 Akadem. Verlagsgesellschaft Frankfurt am Main; RUPPERSBERG
G.H. "Registrierung der Sichtweite mit dem
Streulichtschreiber" Seiten 252-263**

(73) Patentinhaber: **DAIMLER-BENZ AKTIENGE-
SELLSCHAFT**
**Mercedesstrasse 136**
**D-70327 Stuttgart(DE)**

Patentinhaber: **MESSERSCHMITT-
BÖLKOW-BLOHM GmbH**

**D-81663 München(DE)**

(72) Erfinder: **Albrecht, Hans, Prof. Dr.**
**Eichenweg 20**
**D-7050 Waiblingen(DE)**
Erfinder: **Lauer, Wolfgang**
**Hinterer Holzweg 58**
**D-7300 Esslingen(DE)**
Erfinder: **Reiniger, Siegfried, Dr.**
**Rechbergstrasse 30**
**D-7301 Deizisau(DE)**
Erfinder: **Spies, Hans**
**Schiessstätte 12**
**D-8068 Pfaffenhofen(DE)**
Erfinder: **Laucht, Horst, Dr.**
**Hermann-Löns-Weg 16**
**D-8206 Bruckmühl(DE)**
Erfinder: **Spies, Martin**
**Am Berg 4**
**D-8068 Pfaffenhofen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 312 788 B1

**Beschreibung**

Die Erfindung betrifft eine Vorrichtung zur Sichtweitenmessung mit einem Lichtemitter zur Erzeugung von Lichtimpulsen, einem Lichtsensor zur Registrierung des bei Aussendung der Lichtimpulse von Streuzonen, beispielsweise Partikeln, im Lichtweg zurückgestreuten Lichtes und einer Auswerteschaltung zur Umsetzung von Ausgangssignalen des Lichtsensors in Steuersignale einer Sichtweitenanzeige od.dgl., wobei die Auswerteschaltung die Ausgangssignale des Lichtsensors nur während vorgehbarer Zeitfenster verarbeitet.

Eine entsprechende Vorrichtung ist Gegenstand der DE-OS 23 28 092. Dabei wird Licht impulsförmig von einem Lichtemitter in einer vorgegebenen Richtung ausgesendet. Soweit im Lichtweg Streuzonen vorhanden sind, wird ein mehr oder weniger großer Anteil des Lichtes auf einen dem Lichtemitter benachbarten Lichtsensor reflektiert. Um zu ermöglichen, daß nur zurückgestreutes Licht einer in vorgegebener Entfernung befindlichen Streuzone berücksichtigt wird, ist der Lichtsensor mit einer Gatterschaltung gekoppelt, um nur solche Ausgangssignale des Lichtsensors auszuwerten, welche zeitlich zwischen vorgegebenen Impulsen des Lichtemitters auftreten.

Bei einer aus der DE-OS 24 27 623 bekannten Vorrichtung wird an einem Kraftfahrzeug die Intensität des zurückgestreuten Scheinwerferlichtes ausgewertet. Dazu ist am Fahrzeug ein Lichtsensor angeordnet, welcher nur von Licht aus einem schmalen Winkelbereich vor dem Fahrzeug beaufschlagt werden kann.

Bei einer in der DE-OS 24 27 623 beschriebenen abgewandelten Vorrichtung sind zwei gleichartige Lichtsensoren angeordnet, welche in gleichartiger Weise dem Tages- bzw. Umgebungslicht ausgesetzt sind. Ein Lichtsensor liegt zusätzlich im Lichtweg einer Lichtquelle. Die Ausgangssignale der Lichtsensoren werden durch Differenzbildung ausgewertet. Aufgrund der gleichmäßigen Beaufschlagung beider Lichtsensoren mit Umgebungs- bzw. Tageslicht wird dabei der Einfluß des Umgebungs- bzw. Tageslichtes unterdrückt, so daß ausschließlich das zusätzliche Licht der Lichtquelle berücksichtigt wird. Die Intensität des von der Lichtquelle auf den zugeordneten Lichtsensor fallenden Lichtes ist davon abhängig, ob im Lichtweg Streuzonen, welche beispielsweise durch Nebel u.dgl. verursacht werden können, vorhanden sind oder nicht. Auf diese Weise wird vermieden, daß die Umgebungshelligkeit einen Einfluß auf die Messung der Sichtweite hat.

Aufgabe der Erfindung ist es nun, eine für den Einsatz in Kraftfahrzeugen noch besser angepaßte Vorrichtung zur Sichtweitenmessung zu schaffen.

Diese Aufgabe wird bei einer Vorrichtung der eingangs angegebenen Art dadurch gelöst, daß sowohl die von Streuzonen - wie Nebel od.dgl. - außenseitig der Windschutzscheibe einer Fahrer- bzw. Führerkabine eines Kraftfahrzeuges als auch die von Verschmutzungen - wie Beschlag od.dgl. - an der Windschutzscheibe verursachte Rückstreuung auswertbar ist, indem der Lichtemitter sowie der Lichtsensor innenseitig der Windschutzscheibe angeordnet und die Lichtimpulse auf die Windschutzscheibe und durch sie hindurch nach außen gerichtet sind.

Die Erfindung beruht auf der Erkenntnis, daß auch die Verschmutzungen der Windschutzscheibe einen sehr starken Einfluß auf die jeweilige Sichtweite des Fahrers haben. Aufgrund der erfindungsgemäßen Anordnung werden verschmutzte Scheiben bei der Messung der Sichtweite zwangsläufig berücksichtigt, denn der Lichtsensor wird auch dann beaufschlagt, wenn Verschmutzungen an der Windschutzscheibe zu Rückstreuungen des Lichtes führen. Darüber hinaus werden Sichtbehinderungen im Raum außenseitig der Windschutzscheibe registriert, da die Lichtimpulse auch durch die Windschutzscheibe hindurchgerichtet sind und dementsprechend auch außenseitig der Windschutzscheibe durch Nebel od.dgl. zum Lichtsensor reflektiert werden.

Gemäß einer bevorzugten Ausführungsform der Erfindung ist der Lichtemitter derart angeordnet, daß die Lichtimpulse auf die vom Scheibenwischer der Windschutzscheibe bestrichene Zone gerichtet sind. Dementsprechend wird das Ergebnis der Sichtweitenmessung nach Betätigung der Scheibenwischer bzw. einer damit kombinierten Scheibenwaschanlage gegebenenfalls korrigiert.

Als Lichtemitter und Lichtsensor können zweckmäßigerweise eine Laserdiode bzw. eine Photodiode angeordnet sein. Aufgrund der geringen Abmessungen dieser Bauteile besteht die Möglichkeit, dieselben in den innenseitig der Windschutzscheibe angeordneten Rückspiegel eines Kraftfahrzeuges zu integrieren.

Grundsätzlich kann die erfindungsgemäße Vorrichtung mit sichtbarem Licht arbeiten. Um jedoch jegliche Störung des Fahrers zu vermeiden, ist es zweckmäßig, wenn der Lichtemitter Licht außerhalb des sichtbaren Wellenbereiches, beispielsweise Infrarotlicht, erzeugt.

Als besonderer Vorzug ist anzusehen, daß die erfindungsgemäße Vorrichtung außer zur Sichtweitenmessung auch für eine Messung der Entfernung einer Nebelzone od.dgl. vom Fahrzeug eingerichtet werden kann. Somit besteht die Möglichkeit, den Fahrer hinreichend lange vor Einfahrt in eine Nebelzone bzw. -wand zu warnen.

Zu diesem Zweck ist vorgesehen, daß die Auswerteschaltung die Ausgangssignale des Lichtsensors nach Aussendung eines Lichtimpulses für mehrere vorgebbare Zeitfenster bzw. -intervalle gesondert verarbeitet, wobei die zeitlichen Abstände zwischen dem Einsatz des Lichtimpulses und dem Beginn der jeweiligen Zeitfenster bzw. -intervalle entsprechend unterschiedlichen Laufzeiten vorgebbar sind, welche vom Licht für den Durchlauf unterschiedlich langer Wege benötigt werden, die vom Lichtemitter zu unterschiedlich entfernten Streuzonen - beispielsweise Nebelzonen - und von dort zum Lichtsensor führen, und daß die zeitlichen Längen der Lichtimpulse kürzer als die jeweiligen Laufzeiten sind.

Bei dieser Anordnung wird der Tatsache Rechnung getragen, daß das vom Emitter ausgesandte und an den Streuzonen zum Lichtsensor zurückgestreute Licht je nach Entfernung der Streuzone vom Lichtemitter bzw. Lichtsensor unterschiedlich lange Lichtwege durchläuft. Wenn nun der Lichtsensor die zurückgestreute Lichtintensität in unterschiedlichen zeitlichen Abständen nach Erzeugung des Lichtimpulses durch den Lichtemitter registriert, so ist dies gleichbedeutend damit, daß die Intensitäten von in unterschiedlichen Entfernungen zurückgestreutem Licht registriert werden. Sollte nun in größerer Entfernung von der Sichtweitenmeßvorrichtung eine Nebelwand vorhanden sein, während die Sicht im Bereich vor der Nebelwand gut ist, so wird der Lichtsensor innerhalb der Zeitfenster bzw. -intervalle, die relativ kurzen Lichtwegen und damit Streuzonen in relativ geringer Entfernung zugeordnet sind, praktisch keine Lichtintensität registrieren. Dagegen wird innerhalb der Zeitfenster bzw. -intervalle, die einem größeren Lichtweg und damit Streuzonen im Bereich der Nebelwand zugeordnet sind, eine vergleichsweise starke Lichtintentität registriert . Dementsprechend läßt sich die Entfernung einer Nebelwand dadurch feststellen, daß überprüft wird, innerhalb welcher Zeitfenster bzw. -intervalle eine relative Erhöhung der Lichtintensität am Lichtsensor auftritt.

Die Auswerteschaltung kann gegebenenfalls weitere Eingänge für die Fahrgeschwindigkeit eines Fahrzeuges od.dgl. und/oder Wetterdaten aufweisen.

Damit wird die Möglichkeit geschaffen, daß die Auswerteschaltung in Abhängigkeit von den Ausgangssignalen des Lichtsensors und/oder von Signalen an den weiteren Eingängen eine Anzeige für die Sichtweite, eine Anzeige für eine empfohlene Fahrgeschwindigkeit, eine Geschwindigkeitsbegrenzung für das Fahrzeug, einen Scheibenwischer, eine Scheibenwaschanlage und/oder einem Defroster der Windschutzscheibe betätigt.

Im übrigen wird hinsichtlich bevorzugter Merkmale der Erfindung auf die Ansprüche sowie die nachfolgende Erläuterung bevorzugter Ausführungsformen anhand der Zeichnung verwiesen.

Dabei zeigt

Fig. 1 ein schematisiert dargestelltes Kraftfahrzeug mit der erfindungsgemäßen Vorrichtung zur Sichtweitenmessung,

Fig. 2 ein Blockschaltbild der erfindungsgemäßen Vorrichtung,

Fig. 3 ein beispielhaftes Diagramm, welches den Pegel der Ausgangssignale des Lichtsensors in Abhängigkeit von der Zeit wiedergibt, und

Fig. 4 die Zeittore bzw. -intervalle, während der die Auswerteschaltung die Ausgangssignale des Lichtsensors verarbeitet.

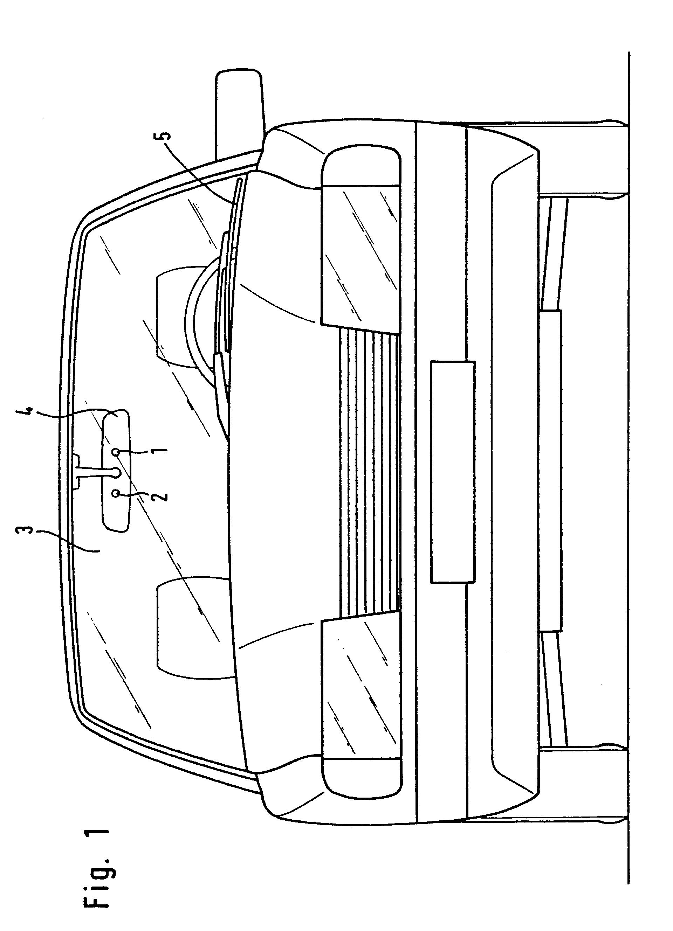

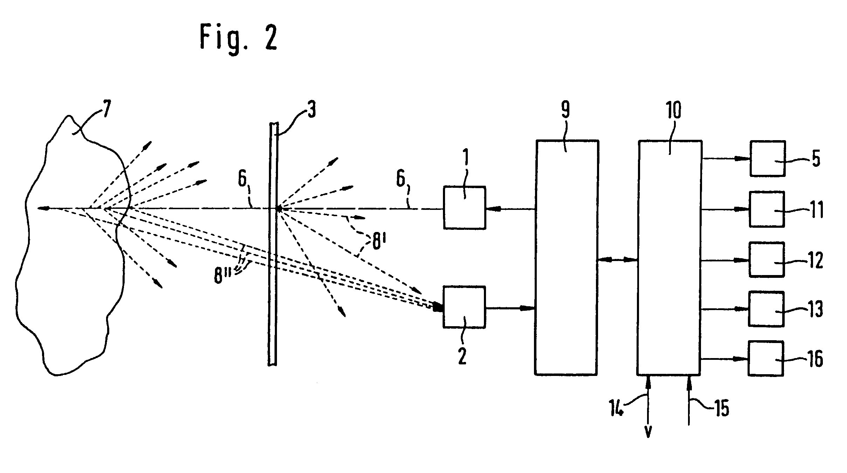

Gemäß den Figuren 1 und 2 besitzt die erfindungsgemäße Vorrichtung zur Sichtweitenmessung einen Lichtemitter 1, beispielsweise eine Laserdiode, sowie einen Lichtsensor 2, beispielsweise eine Photodiode. Der Lichtemitter 1 sowie der Lichtsensor 2 sind innenseitig einer Windschutzscheibe 3 eines Kraftfahrzeuges an einem Rückspiegel 4 angeordnet. Der Lichtemitter 1 erzeugt zeitlich extrem kurze Lichtblitze, deren Lichtstrahlen etwa in Fahrtrichtung des Fahrzeuges auf einen vom Scheibenwischer 5 bestrichenen Bereich der Windschutzscheibe 3 gerichtet sind. Je nach Verschmutzungsgrad der Windschutzscheibe 3 wird dementsprechend ein mehr oder weniger großer Anteil des emittierten Lichtes an der Windschutzscheibe 3 zurückgestreut. Darüber hinaus wird auch von dem die Windschutzscheibe 3 durchsetzenden Licht des Lichtemitters 1 ein mehr oder weniger großer Anteil zurückgestreut, wenn das Fahrzeug durch ein Nebelgebiet fährt bzw. sich einer Nebelwand annähert, oder wenn die Sichtverhältnisse durch andere Schwebestoffe in der Atmosphäre, beispielsweise Rauch od.dgl., eingeschränkt sind.

Dies ist in Fig. 2 schematisch dargestellt. Das Licht des vom Lichtemitter 1 ausgesandten Lichtstrahles 6 wird zunächst an der Windschutzscheibe 3 und sodann an einer beispielsweise durch eine Nebelwand gebildeten Streuzone 7 zurückgestreut, wobei die rückgestreuten Lichtstrahlen mit 8′ bzw. 8″ bezeichnet sind.

Die rückgestreuten Lichtstrahlen 8′ und 8″ fallen teilweise auf den Lichtsensor 2, so daß derselbe ausgangsseitig ein Signal abgibt, welches den Pegel der jeweils aufgefangenen Lichtintensität wiedergibt.

Dabei ist die Sichtweite um so schlechter, je größer die Intensität der zurückgestreuten Lichtstrahlen 8′ und 8″ ist.

Mittels eines Signalprozessors 9 lassen sich die Ausgangssignale des Lichtsensors 2 so auswerten, daß die von der Windschutzscheibe 3 zurückgestreuten Lichtstrahlen 8′ und die von der Streuzone 7 zurückgestreuten Lichtstrahlen 8″ unterschieden werden können.

Dazu wird der Lichtemitter 1 vom Signalprozessor 9 derart angesteuert, daß die zeitliche Länge des vom Lichtemitter 1 erzeugten Lichtblitzes höchstens so lang ist wie die Laufzeit, welche vom Licht für den Durchlauf eines längs des Lichtstrahles 6 zur Windschutzscheibe 3 und von dort längs eines der Lichtstrahlen 8' zum Lichtsensor 2 führenden Weges benötigt wird. Die zeitliche Dauer der Lichtblitze liegt also bei ca. 1 ns.

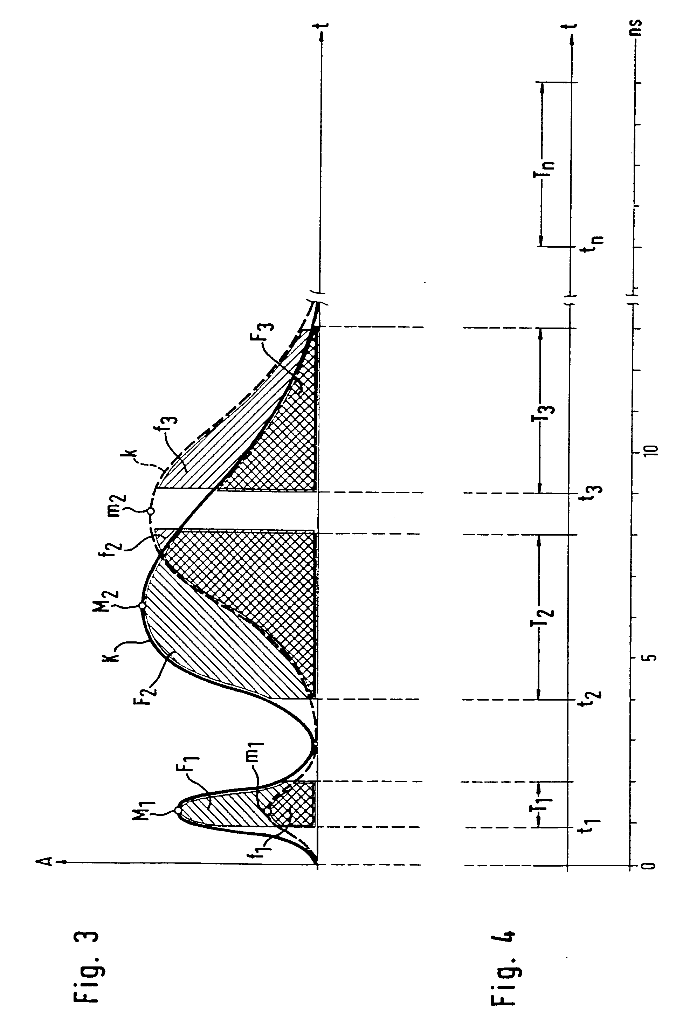

Ausgangsseitig des Lichtsensors 2 kann dann ein Signal abgegriffen werden, dessen Amplitude A prinzipiell den durch die Kurve K in Fig. 3 wiedergegebenen Verlauf bezüglich der Zeit t hat. Die Kurve K besitzt ein erstes Maximum $M_1$, welches bereits nach äußerst kurzer Zeit nach Erzeugung des Lichtblitzes durch den Lichtemitter 1 auftritt. Dieses Maximum $M_1$ wird durch die teilweise Rückstrahlung des Lichtstrahles 6 an der Windschutzscheibe 3 verursacht.

In einem zeitlich größeren Abstand nach Erzeugung des Lichtblitzes durch den Lichtemitter 1 tritt ein weiteres Maximum $M_2$ auf, wenn der Lichtstrahl 6 an einer von der Windschutzscheibe des Fahrzeuges weiter entfernten Streuzone 7 (vgl. Fig. 2) zurückgestreut wird. Dabei ist die zeitliche Lage des weiteren Maximums $M_2$ ein Maß für die Entfernung der Streuzone 7 vom Fahrzeug, denn die zeitliche Lage des Maximums $M_2$ wird durch die Laufzeit des Lichtes vom Lichtemitter 1 zur Streuzone 7 und zurück zum Lichtsensor 2 bestimmt.

Die Höhe und Form beider Maxima $M_1$ und $M_2$ ist ein Maß für die Sichtbeeinträchtigung, welche aufgrund der Dichte der Verschmutzung an der Windschutzscheibe 3 bzw. der Partikeldichte der Streuzone 7 verursacht wird.

Die Kurve K gibt beispielhaft den Fall wieder, daß die Sichtbeeinträchtigung durch Verschmutzungen der Windschutzscheibe 3 relativ stark ist, dementsprechend hat die Amplitude A des Ausgangssignales des Lichtsensors 2 am Maximum $M_1$ einen vergleichsweise großen Wert. Im übrigen bedeutet der relativ geringe zeitliche Abstand zwischen den Maxima $M_1$ und $M_2$, daß die Streuzone 7, beispielsweise eine Nebelwand, vom Fahrzeug einen vergleichsweise geringen Abstand hat.

Die Kurve k zeigt qualitativ den zeitlichen Verlauf der Amplitude A für den Fall, daß die Verschmutzung der Windschutzscheibe 3 vergleichsweise gering ist und die Streuzone 7 bzw. Nebelwand vom Fahrzeug eine größere Entfernung haben. Das Maximum $m_1$ besitzt dementsprechend eine geringe Höhe; außerdem ist der zeitliche Abstand der beiden Maxima $m_1$ und $m_2$ vergleichsweise groß.

Die Ausgangssignale des Lichtsensors 2 werden vom Signalprozessor 9 beispielsweise durch Mittelung bzw. Integration der Amplituden A verarbeitet. Dabei liegt eine Besonderheit der Verarbeitung darin, daß die Mittelung bzw. Integration nur während vorgegebener bzw. vorgebbarer Zeitfenster bzw. -intervalle erfolgt.

In diesem Zusammenhang wird auf die Fig. 4 verwiesen. Dort sind an der Zeitachse (t-Achse) mehrere Zeitfenster bzw. -intervalle $T_1, T_2, T_3$ und $T_n$ aufgezeichnet. Dabei überdeckt das Zeitfenster bzw. -intervall $T_1$ den Zeitraum, innerhalb dessen die ersten Maxima $M_1$ bzw. $m_1$ der Amplitude der Lichtsensorsignale gemäß Fig. 3 zu erwarten sind. Die weiteren Zeitfenster bzw. -intervalle $T_2$ bis $T_n$ überdecken die Zeitspanne, innerhalb der die weiteren Maxima $M_2$ bzw. $m_2$ der Amplitude A in Fig. 3 auftreten können.

Der Signalprozessor 9 bildet nun für die genannten Zeitfenster bzw. -intervalle $T_1$ bis $T_n$ die zeitlichen Mittelwerte bzw. Zeitintegrale der Amplitude A. Wenn also die Zeitfenster bzw. -intervalle $T_1$ bis $T_n$ jeweils zu den Zeitpunkten $t_1$ bis $t_n$ beginnen, so wird die Mittelwertbildung bzw. Integration der Amplituden A nacheinander für folgende Wertebereiche von t ausgeführt:

$$t_1 \leq t \leq t_1 + T_1$$
$$t_2 \leq t \leq t_2 + T_2$$
$$t_3 \leq t \leq t_3 + T_3$$
und
$$t_n \leq t \leq t_n + T_n.$$

Die errechneten Mittelwerte bzw. Integrale stellen bildlich ein Maß für die Fläche unterhalb der Kurven K bzw. k im Bereich der oben angegebenen Werte von t dar. Diese Flächen sind in Fig. 3 im Falle der Kurve K mit $F_1$ bis $F_3$ bezeichnet, im Falle der Kurve k mit $f_1$ bis $f_3$. Innerhalb des Zeitfensters bzw. -intervalles $T_n$ haben die genannten Mittelwerte bzw. Integrale bzw. die dieselben verkörpernden Flächen bei dem in Fig. 3 dargestellten Beispiel praktisch den Wert 0.

Der für das Zeitfenster bzw. -intervall $T_1$ errechnete Mittelwert bzw. Integralwert ist dann ein Maß für die Verschmutzung der Windschutzscheibe innen und außen. Der für das Zeitfenster bzw. -intervall $T_2$ errechnete Wert ist ein Maß für die Sichtbehinderung durch Nebel od.dgl. in einer durch den Strömungsverlauf der Luft vor der Windschutzscheibe 3 beeinflußten Zone. Der für das Zeitfenster bzw. -intervall $T_3$ errechnete Wert stellt ein Maß für die Sichtbehinderung durch Nebel od.dgl. in einer Entfernung dar, in der noch keine Störung oder Turbulenz durch das Fahrzeug auftritt. Sollte der Mittelwert bzw. das Integral der Amplitude A für das Zeitfenster bzw. -intervall $T_n$ einen von 0 deutlich verschiedenen Wert haben, so bedeutet dies, daß vor dem Fahrzeug verminderte Sicht herrscht. Die verschiedenen Zeitfenster bzw. -intervalle sind also jeweils Sichtbehinderungen in unterschiedlichen Entfernungen vom Lichtemitter 1 bzw. Lichtsensor 2 zugeordnet.

Abweichend von der Darstellung in Fig. 4 können die Zeitfenster bzw. -intervalle $T_1$ bis $T_n$ auch eine kürzere zeitliche Breite besitzen und in größerer Anzahl vorgesehen sein. Darüber hinaus ist es auch möglich, mit einander zeitlich überlappenden Zeitfenstern bzw. -intervallen zu arbeiten.

Wesentlich ist vor allem, daß die Verarbeitung der Ausgangssignale des Lichtsensors 2, d.h. im dargestellten Beispiel die Verarbeitung der Signalamplituden A bzw. die Mittelwert-und/oder Integralbildung, für die einzelnen Zeitfenster bzw. -intervalle $T_1$ bis $T_n$ gesondert durchgeführt werden.

Gegebenenfalls können auch die für je zwei aufeinanderfolgende Zeitfenster bzw. -intervalle berechneten Werte voneinander subtrahiert werden. Dadurch lassen sich Störeinflüsse eliminieren, die die Werte der Amplitude A im wesentlichen zeitunabhängig um einen weitestgehend konstanten Wert erhöhen oder erniedrigen. Durch diese Verarbeitungsweise kann also ein erhöhter Störabstand erzielt werden. Im Zusammenhang mit dieser Verarbeitungsweise ist es zweckmäßig, wenn die einzelnen Zeitfenster bzw. -intervalle $T_1$ bis $T_n$ relativ geringe zeitliche Breiten besitzen und mit engen zeitlichen Abständen aufeinanderfolgen.

Zusammenfassend ist also festzustellen, daß aufgrund der sehr kurzen Zeitdauer der vom Lichtemitter 1 erzeugten Lichtblitze und der nach Zeitfenstern bzw. -intervallen $T_1$ bis $T_n$ gesonderten Verarbeitung der Ausgangssignale des Lichtsensors 2 sowohl Meßwerte über das Maß einer Sichtbehinderung bzw. das Maß der Sichtweite als auch Werte darüber ermittelt werden können, in welcher Entfernung sich eine sichtbehindernde optische Streuzone, beispielsweise Nebel, befindet.

In Abhängigkeit von den ermittelten Daten für die Sichtweite sowie die Entfernung optischer Streuzonen kann der Signalprozessor 9 unmittelbar oder über eine Schnittstellenschaltung 10 eine Anzeige 11 steuern, welche dem Fahrer des Kraftfahrzeuges die jeweilige Sichtweite zahlenmäßig oder bildlich darstellt. Des weiteren können gegebenenfalls der Scheibenwischer 5, ein Defroster 12 bzw. eine Waschanlage 13 für die Windschutzscheibe automatisch betätigt werden, um dieselbe zu reinigen bzw. von Beschlag zu befreien.

Insbesondere wenn der Signalprozessor 9 bzw. die Schnittstellenschaltung 10 zusätzliche Eingänge 14 und 15 für die Fahrgeschwindigkeit v und/oder Wetterdaten, beispielsweise Außentemperatur und Luftfeuchtigkeit, besitzen, kann auch unter Berücksichtigung der an den Eingängen 14 und 15 vorliegenden Informationen eine Geschwindigkeitsbegrenzung 16 für das Fahrzeug betätigt werden, so daß es für den Fahrer unmöglich wird, mit einer gemäß der jeweiligen Sichtweite bzw. den jeweiligen Wetterbedingungen unangemessen hohen Geschwindigkeit zu fahren.

Abweichend von der dargestellten Ausführungsform können Lichtemitter 1 und/oder Lichtsensor 2 gegebenenfalls auch doppelt angeordnet sein, wobei bei Doppelanordnung die Möglichkeit besteht, daß die beiden Lichtemitter 1 Licht unterschiedlicher Wellenlänge erzeugen. Abgesehen davon, daß durch eine derartige teilweise oder vollständig redundante Anordnung die Sicherheit der Vorrichtung erhöht wird, besteht damit gegebenenfalls auch die Möglichkeit, die Art der jeweiligen Sichtbehinderung genauer festzustellen. Optische Streuzonen, die wie Nebel oder Rauch aus einer Wolke kleiner Partikel bestehen, zeigen nämlich je nach Partikelgröße und Wellenlänge des Lichtes ein unterschiedliches Streuverhalten. Wenn also das Streuverhalten für Licht unterschiedlicher Wellenlängen ausgewertet wird, so kann daraus eine Information über die Partikelgröße abgeleitet werden, beispielsweise können gegebenenfalls Nebel, Nieselregen und "normaler" Regen unterschieden werden.

Da die vorzugsweise als Lichtemitter 1 verwendeten Laserdioden Lichtstrahlen bzw. -bündel mit äußerst geringer Aufleuchtzeit zu erzeugen vermögen, ist auch dann mit einer Belästigung des Fahrers durch gegebenenfalls zurückgestreutes Licht nicht zu rechnen, wenn das vom Lichtemitter 1 erzeugte Licht im sichtbaren Spektralbereich liegt. Gleichwohl ist jedoch vorgesehen, Lichtemitter 1 zu verwenden, deren Spektralbereich außerhalb des für das menschliche Auge sichtbaren Spektralbereiches liegt.

## Patentansprüche

1. Vorrichtung zur Sichtweitenmessung mit einem Lichtemitter (1) zur Erzeugung von Lichtimpulsen bzw. -blitzen, einem Lichtsensor (2) zur Registrierung des bei Aussendung der Lichtimpulse bzw. -blitze von Streuzonen (3,7) im Lichtweg (6) zurückgestreuten Lichtes (8',8'') und einer Auswerteschaltung (9) zur Umsetzung von Ausgangssignalen des Lichtsensors (2) in Steuersignale einer Sichtweitenanzeige (11), wobei die Auswerteschaltung (9) die Ausgangssignale des Lichtsensors (2) nur während vorgehbarer Zeitfenster verarbeitet, **dadurch gekennzeichnet,** daß sowohl die von Streuzonen (7) außenseitig der Windschutzscheibe (3) einer Fahrer- bzw. Führerkabine eines Kraftfahrzeuges als auch die von Verschmutzungen an der Windschutzscheibe (3) verursachte Rückstreuung (8',8'') auswertbar ist, indem der Lichtemitter (1) sowie der Lichtsensor (2) innenseitig der Windschutzscheibe (3) angeordnet und die Lichtimpulse bzw. -blitze auf die Windschutzscheibe (3) und durch sie hindurch nach außen gerichtet sind.

2. Vorrichtung nach Anspruch 1,
**dadurch gekennzeichnet,**
daß Lichtemitter (1) und Lichtsensor (2) an einem Rückspiegel (4) innerhalb der Fahrer- bzw. Führerkabine angeordnet sind.

3. Vorrichtung nach einem der Ansprüche 1 oder 2, dadurch gekennzeichnet, daß zur Unterscheidung unterschiedlicher Arten der Sichtbehinderung, wie z.B. Beschlag auf der Innenseite der Windschutzscheibe, Nebel, Schnee usw., mehrere Lichtemitter (1) für Licht unterschiedlicher Wellenlänge angeordnet sind.

4. Vorrichtung nach einem der Ansprüche 1 bis 3, dadurch gekennzeichnet, daß der bzw. die Lichtemitter (1) eine Lichtstrahlung außerhalb des sichtbaren Wellenlängenbereiches, insbesondere Infrarotlicht, erzeugen.

5. Vorrichtung nach einem der Ansprüche 1 bis 3, dadurch gekennzeichnet, daß die Lichtimpulse bzw. -blitze auf die vom Scheibenwischer (5) der Windschutzscheibe (3) überstrichene Zone gerichtet sind.

6. Vorrichtung nach einem der Ansprüche 1 bis 5, dadurch gekennzeichnet, daß die Auswerteschaltung ein Signalprozessor (9) ist, der die Ausgangssignale (A) des Lichtsensors (2) nach Aussendung eines Lichtimpulses bzw. -blitzes für mehrere vorgebbare Zeitfenster bzw. -intervalle $T_1$ bis $T_n$ gesondert verarbeitet, wobei die zeitlichen Abstände zwischen dem Einsatz des Lichtimpulses bzw. -blitzes und dem Beginn $t_1$ bis $t_n$ der jeweiligen Zeitfenster bzw. -intervalle $T_1$ bis $T_n$ entsprechend unterschiedlichen Laufzeiten vorgebbar sind, welche von Licht für den Durchlauf unterschiedlich langer Wege benötigt werden, die vom Lichtemitter (1) zu unterschiedlich entfernten Streuzonen (Windschutzscheibe 3;7) und von dort zum Lichtsensor (2) führen, und daß die zeitliche Länge der Lichtimpulse bzw. -blitze kürzer als die jeweiligen Laufzeiten sind.

7. Vorrichtung nach Anspruch 6, dadurch gekennzeichnet, daß die Auswerteschaltung (9) für jedes Zeitfenster bzw. -intervall $T_1$ bis $T_n$ einen zeitlichen Mittelwert bzw. ein Zeitintegral der Ausgangssignale (A) des Lichtsensors (2) bildet.

8. Vorrichtung nach einem der Ansprüche 1 bis 7, dadurch gekennzeichnet, daß die Auswerteschaltung (9) weitere Eingänge (14,15) für die Fahrgeschwindigkeit (v) eines Fahrzeuges od.dgl. und/oder Wetterdaten, wie Umgebungstemperatur, Luftfeuchtigkeit, Umgebungshelligkeit, aufweist.

9. Vorrichtung nach einem der Ansprüche 1 bis 8, dadurch gekennzeichnet, daß die Auswerteschaltung (9) in Abhängigkeit von Ausgangssignalen des Lichtsensors (2) und/oder von Signalen an den weiteren Eingängen (14,15) eine Anzeige für die Sichtweite (11), eine Anzeige für eine empfohlene Fahrgeschwindigkeit, eine Geschwindigkeitsbegrenzung (16) für das Fahrzeug, einen Scheibenwischer (5), eine Scheibenwaschanlage (13) und/oder einen Defroster (12) der Windschutzscheibe (3) betätigt.

**Claims**

1. Device for visibility measurement having a light emitter (1) for generating light pulses or flshes, a light sensor (2) for registering the light (8', 8'') scattered back from scatter zones (3, 7) in the light path (6) upon emission of the light pulses or flashes and an evaluation circuit (9) for converting output signals of the light sensor (12) into control signals of a visibility display (11), the evaluation circuit (9) processing the output signals of the light sensor (2) only during predeterminable time windows, characterized in that both the backscatter from scatter zones (7) outside the windscreen (3) of a driver's compartment or cab of a motor vehicle and the backscatter (8', 8'') caused by soiling on the windscreen (3) can be evaluated by virtue of the fact that the light emitter (1) and the light sensor (2) are arranged inside the windscreen (3) and the light pulses or flashes are directed onto the windscreen (3) and through it to the outside.

2. Device according to Claim 1, characterized in that light emitter (1) and light sensor (2) are arranged on a rear view mirror (4) inside the driver's compartment or cab.

3. Device according to one of Claims 1 or 2, characterized in that, to distinguish different types of viewing hindrance, such as for example deposit on the inside of the windscreen, fog, snow etc., a plurality of light emitters (1) for light of different wavelengths are arranged.

4. Device according to one of Claims 1 to 3, characterised in that the light emitter or emitters (1) generate a radiation of light outside the visible wavelength range in particular infrared light.

**5.** Device according to one of Claims 1 to 3, characterized in that the light pulses or flashes are directed at the zone covered by the windscreen wiper (5) of the windscreen (3).

**6.** Device according to one of Claims 1 to 5, characterized in that the evaluation circuit is a signal processor (9) which processes separately the output signals (A) of the light sensor (2) after emission of a light pulse or flash for a plurality of predeterminable time windows or intervals $T_1$ to $T_n$, the time lapses between the onset of the light pulse or flash and the beginning $t_1$ to $t_n$ of the respective time windows or intervals $T_1$ to $T_n$ being predeterminable according to various transit times which are required by light for covering variously long paths which lead from the light emitter (1) to variously remote scatter zones (windscreen 3; 7) and from there to the light sensor (2), and in that the lengths of time of the light pulses or flashes are shorter than the respective transit times.

**7.** Device according to Claim 6, characterized in that the evaluation circuit (9) forms for each time window or interval $T_1$ to $T_n$ a time average or a time integral of the output signals (A) of the light sensor (2).

**8.** Device according to one of Claims 1 to 7, characterized in that the evaluation circuit (9) has further inputs (14, 15) for the travelling speed (v) of a vehicle or the like and/or weather data such as ambient temperature, atmospheric humidity, ambient brightness.

**9.** Device according to one of Claims 1 to 8, characterized in that the evaluation circuit (9) actuates, as a function of output signals of the light sensor (2) and/or of signals at the further inputs (14, 15), a display for the visibility (11), a display for a recommended travelling speed, a speed limitation (16) for the vehicle, a windscreen wiper (5), a windscreen washing system (13) and/or a defroster (12) of the windscreen (3).

**Revendications**

**1.** Dispositif pour mesurer le champ visuel, comportant une source de lumière (1) servant à produire des impulsions lumineuses ou des éclairs, un capteur de lumière (2) pour enregistrer la lumière (8',8'') rétrodiffusée par des zones diffusantes (3,7) dans le trajet de lumière (6) lors de l'émission des impulsions de lumière ou des éclairs, et un circuit d'évaluation (9) servant à convertir des signaux de sortie du capteur de lumière (2) en des signaux de commande d'un dispositif (11) d'affichage du champ visuel, le circuit d'évaluation (9) traitant les signaux de sortie du capteur de lumière (2) uniquement pendant des fenêtres temporelles pouvant être prédéterminées, caractérisé en ce que la rétrodiffusion (8',8'') provoquée aussi bien par des zones diffusantes (7) à l'extérieur du pare-brise (3) d'une cabine du chauffeur ou du conducteur d'un véhicule automobile que par des saletés situées sur le pare-brise (3) peut être évaluée, par le fait que la source de lumière (1) ainsi que le capteur de lumière (2) sont disposés sur le côté intérieur du pare-brise (3) et que les impulsions de lumière ou les éclairs sont dirigés vers le pare-brise (3) et, à travers ce dernier, en direction de l'extérieur.

**2.** Dispositif selon la revendication 1, caractérisé en ce que la source de lumière et le capteur de lumière (2) sont disposés sur un rétroviseur (4) situé à l'intérieur de la cabine du chauffeur ou du conducteur.

**3.** Dispositif selon l'une des revendications 1 ou 2, caractérisé en ce que pour établir une distinction entre différents types de gênes dans l'observation, comme par exemple un dépôt sur la face arrière du pare-brise, du brouillard, de la neige, etc., il est prévu plusieurs sources de lumière (1) servant à délivrer des lumières ayant des longueurs d'onde différentes.

**4.** Dispositif selon l'une des revendications 1 à 3, caractérisé en ce que la ou les sources de lumière (1) produisent un rayonnement lumineux en dehors de la gamme des longueurs d'onde visibles, notamment un rayonnement infrarouge.

**5.** Dispositif selon l'une des revendications 1 à 3, caractérisé en ce que les impulsions de lumière ou les éclairs sont dirigés vers la zone balayée par l'essuie-glace (5) du pare-brise (3).

**6.** Dispositif selon l'une des revendications 1 à 5, caractérisé en ce que le circuit d'évaluation est un processeur de signaux (9), qui traite de façon particulière les signaux de sortie (A) du capteur de lumière (2) après l'émission d'une impulsion de lumière ou d'un éclair pendant plusieurs fenêtres temporelles ou intervalles de temps $T_1$ à $T_n$ pouvant être prédéterminés, les intervalles de temps entre le déclenchement de l'impulsion de lumière ou de l'éclair et le début $t_1$ à $t_n$) de la fenêtre temporelle respective ou de l'intervalle de temps respectif $T_1$ à $T_n$ peuvent prédéterminés en fonction de différents temps de propagation, nécessaires pour parcourir des trajets ayant des longueurs différentes, qui conduisent de l'émetteur de la source de lumière (1) à des zones diffuses éloignées différemment (pare-brise 3; 7) et, à partir de là, jusqu'au capteur de lumière (2), et que la durée des impulsions de lumière ou des éclairs est inférieure aux temps respectifs de propagation.

7. Dispositif selon la revendication 6, caractérisé en ce que le circuit d'évaluation (9) forme, pour chaque fenêtre temporelle ou intervalle de temps ($T_1$ à $T_n$) une valeur moyenne dans le temps ou une intégrale dans le temps des signaux de sortie (A) du capteur de lumière (2).

8. Dispositif selon l'une des revendications 1 à 7, caractérisé en ce que le circuit d'évaluation (9) comporte d'autres entrées (14,15) pour la vitesse de déplacement (v) d'un véhicule ou analogue et/ou des données de nature atmosphérique, telle que la température ambiante, l'humidité de l'air, la luminosité ambiante.

9. Dispositif selon l'une des revendications 1 à 8, caractérisé en ce que le circuit d'évaluation (9) actionne, en fonction de signaux de sortie du capteur de lumière (2) et/ou de signaux appliqués à d'autres entrées (14,15), un dispositif (11) d'affichage du champ visuel, un dispositif d'affichage pour une vitesse de déplacement recommandée, un dispositif (16) de limitation de la vitesse du véhicule, un essuie-glace (5), une installation de lave-glace (13) et/ou un dégivreur (12) du pare-brise (3).

Fig. 1

Fig. 2

EP 0 312 788 B1

Fig. 3

Fig. 4

EP 0 312 788 B1